# EUROPEAN PATENT SPECIFICATION

(11) **EP 4 001 606 B1**
(45) Date of publication and mention of the grant of the patent: **21.06.2023**
(21) Application number: 20209152.6
(22) Date of filing: 23.11.2020
(51) Int. Cl.: F01P 11/02

(54) **A COOLING ARRANGEMENT FOR A VEHICLE**
KÜHLANORDNUNG FÜR EIN FAHRZEUG
AGENCEMENT DE REFROIDISSEMENT POUR VÉHICULE

(43) Date of publication of application: 25.05.2022
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: SOYDAN, Faruk, 41719 GÖTEBORG (SE)
(74) Representative: Zacco Sweden AB

(56) References cited:
- WO-A1-2020/080096
- WO-A1-2020/160656
- US-B2- 9 759 123

## Description

### TECHNICAL FIELD

The invention relates to a cooling arrangement for a vehicle, which arrangement comprises a bottle having a first expansion tank for a coolant and a second expansion tank for a coolant, and a cap which is connectable to and disconnectable from the bottle for covering a mouth of the bottle.

### BACKGROUND

For electric vehicles and plug in hybrid vehicles, cooling of different components such as an electric motor, a battery, etc., is required. Due to different requirements, for example caused by different operating temperatures and pressures, separate cooling circuits are required for different components.

This means that two or more so called degas bottles are used for filling coolant to the different cooling circuits of the vehicle. These bottles also allow the coolant to expand during high temperature conditions, and to release air and/or coolant to the atmosphere through a pressure relief valve in case the pressure in the current circuit exceeds a predetermined value. Such a bottle is shown in US 9759123B2.

In addition to the number of components to be produced, the use of several degas bottles will also increase the complexity and cost of the vehicle by increasing the assembly process time and the packing space required for the components.

### SUMMARY

An objective of the invention is to provide a cooling arrangement for a vehicle, which arrangement can reduce the complexity of a cooling system, simplify the assembly process of a cooling system and/or the process of filling coolant to a cooling system.

The objective is achieved by a cooling arrangement for a vehicle, where the arrangement comprises a bottle having a first expansion tank for a coolant and a second expansion tank for a coolant, and a cap which is connectable to and disconnectable from the bottle for covering a mouth of the bottle, and the mouth has a filling port of the first expansion tank and a filling port of the second expansion tank which both are covered by the cap when the cap is connected to the bottle, and where the cap is provided with a first pressure relief valve allowing fluid to be discharged from the first expansion tank through the first expansion tank filling port to the atmosphere, and a second pressure relief valve allowing fluid to be discharged from the second expansion tank through the second expansion tank filling port to the atmosphere.

The invention is based on the insight that by such an arrangement, one bottle and only one cap is needed for two cooling circuits. The filling ports of the expansion tanks arranged in the bottle mouth can be positioned adjacent to each other facilitating filling of coolant to the cooling system. Further, the arrangement enables different coolants and/or operating conditions to be used for different cooling circuits at the same time as only one degas bottle is used. The placement of both pressure relief valves in the cap makes manufacturing, and replacement of spare parts, less complicated as compared to other solutions where any pressure relief valve would be arranged in the bottle.

The first expansion tank and the second expansion tank are preferably fluidly separated from each other such that fluid communication therebetween is prevented during operation, where the first expansion tank is fluidly connectable to a first cooling circuit and the second expansion tank is fluidly connectable to a second cooling circuit. For example, the first cooling circuit can be used for cooling an electric motor of a vehicle, and the second cooling circuit can be used for cooling a battery of the vehicle.

According to one embodiment of the arrangement, the first pressure relief valve is configured to open at a pressure P1 in the first expansion tank, provided that this pressure P1 is higher than a first predetermined pressure threshold value PT1, and the second pressure relief valve is configured to open at a pressure P2 in the second expansion tank, provided that this pressure P2 is higher than a second predetermined pressure threshold value PT2, and preferably the first predetermined pressure threshold value PT1 is higher than the second predetermined pressure threshold value PT2, i.e. PT1>PT2. Hereby, the bottle can be used for two cooling circuits having different operating pressures at the same time as the requisite releasement of air and/or coolant to the atmosphere can be provided individually for the circuits at the relevant pressure in case the pressure in any of the circuits would exceed a predetermined allowed pressure.

According to a further embodiment, the bottle comprises a wall forming the mouth, and a wall dividing the mouth into the first expansion tank filling port and the second expansion tank filling port. The mouth can suitably be circular and the mouth wall can form a neck of the bottle to which the cap can be connected. The size of the mouth can be adapted to the filling requirements and/or the size of the cap required for accommodating the pressure relief valves. By means of the mouth dividing wall, preferably extending straight across the mouth, the first expansion tank filling port and the second expansion tank filling port can be formed as separate ports within the mouth.

According to a further embodiment, the size of the first expansion tank filling port is greater than the second expansion tank filling port, and preferably the mouth dividing wall is arranged non-centred relative to the mouth making the first expansion tank filling port extending between the mouth wall and a first side of the mouth dividing wall greater than the second expansion tank filling port extending between the mouth wall and a second opposite side of the mouth dividing wall. Hereby, each filling port can be adapted to the size of the current expansion tank and/or a cooling circuit connected to the expansion tank. Further, this difference between the first expansion tank filling port and the second expansion tank filling port enables the cap to be connectable in one way only, securing that the right one of the pressure relief valves is positioned in the intended corresponding filling port.

According to a further embodiment, the size and/or the shape of the first pressure relief valve and/or the position of the first pressure relief valve in the cap, is selected such that the cap is connectable to the bottle only when the first pressure relief valve is received by the first expansion tank filling port. By such a "poka-yoke"-solution it can be secured that the first pressure relief valve is arranged in the first expansion tank filling port (and thereby the second pressure relief valve in the second expansion tank filling port) in a correct position.

Of course it would be possible to instead make the second expansion tank filling port greater than the first expansion tank filling port, and/or to select the size and/or shape of the second pressure relief valve and/or the position of the second pressure relief valve in the cap, such that the cap is connectable to the bottle only when the second pressure relief valve is received by the second expansion tank filling port, in combination with or as an alternative to the embodiments described hereinabove.

According to a further embodiment, the arrangement comprises a seal for sealing between the cap and the bottle, and preferably the seal comprises an O-ring part arranged to seal between the cap and the mouth wall, and an additional seal part arranged to seal between the cap and the mouth dividing wall. Hereby, it is possible to seal the first expansion tank and the second expansion tank relative to the atmosphere and also to seal the first expansion tank and the second expansion tank relative to each other. The seal is suitably made in one piece comprising the circular O-ring and the straight additional seal part.

According to a further embodiment, the bottle is provided with a screw thread and the cap is provided with a corresponding screw thread such that the cap is connectable and disconnectable to/from the bottle by means of the screw threads. A threaded joint or screw fitting is suitable for connecting the cap to the bottle. The cap can easily be connected to and disconnected from the bottle by rotating the cap relative to the bottle.

According to a further embodiment, the cap has a lid portion provided with the screw thread and an inner portion connected to the lid portion, which inner portion is rotationally journaled relative to the lid portion, where the first pressure relief valve and the second pressure relief valve are arranged in the inner portion allowing the first pressure relief valve and the second pressure relief valve to not rotate when the cap being connected to or disconnected from the bottle by rotation of the lid portion. Hereby, the first and second pressure relief valves can be moved downwards and upwards together with the cap, while not rotating and maintaining in the respective correct position relative to the respective filling port, when the cap is rotated for connecting and disconnecting, respectively, the cap and the bottle.

According to a further embodiment, the O-ring part is arranged to seal between the inner portion and the mouth wall, and the additional seal part is arranged to seal between the inner portion and the mouth dividing wall, and preferably the seal is arranged in the inner portion of the cap. Hereby, the seal can be arranged in the cap in a way allowing the seal to not rotate when the cap is being connected or disconnected to/from the bottle by rotation of the cap.

According to a further embodiment, the cap comprises an outer cover connected and rotationally locked to the lid portion which outer cover is arranged outside the lid portion, and the outer cover and the lid portion are arranged relative to each other such that a channel is formed therebetween, which channel is connected to the atmosphere, where the first pressure relief valve is arranged to allow fluid to be discharged from the first expansion tank through the first expansion tank filling port to the channel, and the second pressure relief valve is arranged to allow fluid to be discharged from the second expansion tank through the second expansion tank filling port to the channel. Hereby, the outer cover can be used for providing a grip for rotation of the cap, and covering and protecting the components inside the cap, such as the first and second pressure relief valves and any seal arranged in the cap.

Further advantages and advantageous features of the invention are disclosed in the following description and in the claims

### BRIEF DESCRIPTION OF THE DRAWINGS

With reference to the appended drawings, below follows a more detailed description of embodiments of the invention cited as examples.

In the drawings:
Fig. 1 is a schematic view showing a cooling arrangement for a vehicle,
Fig. 2 is a schematic view showing a variant of a cooling arrangement,
Fig. 3A is a cut view showing a cooling arrangement having a bottle and a cap which are disconnected from each other,
Fig. 3B is a partly cut view showing the cooling arrangement in Fig. 3A, where the bottle and the cap are connected to each other, and
Fig. 4 is a view from below showing the inside of the cap in Fig. 3A.

### DETAILED DESCRIPTION OF EXAMPLE EMBODIMENTS

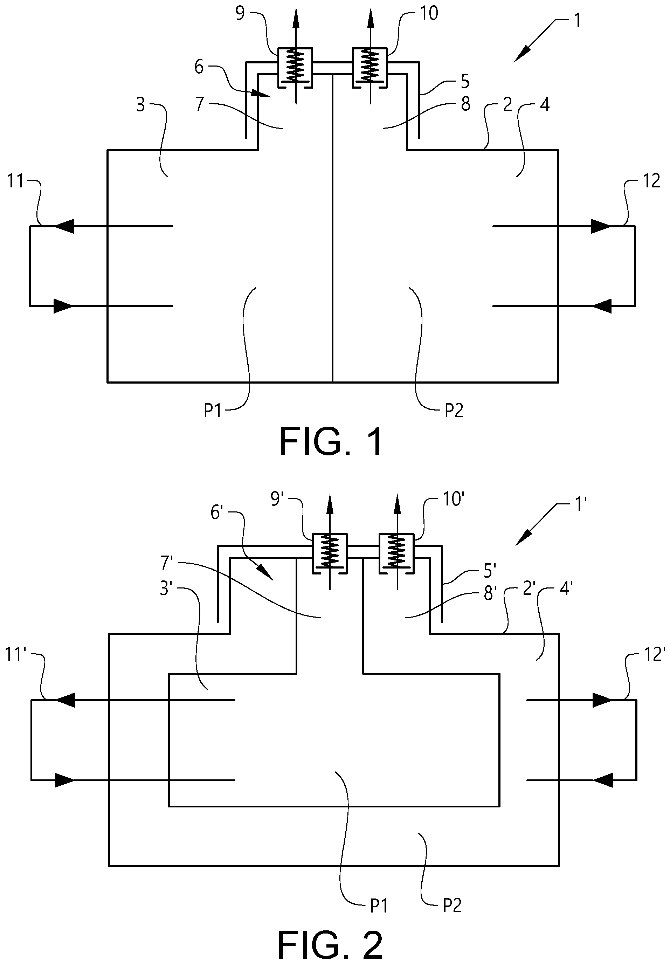

Fig. 1 shows a cooling arrangement 1 for a vehicle. The arrangement 1 comprises a bottle 2 having a first expansion tank 3 for a coolant and a second expansion tank 4 for a coolant, and a cap 5 which is connectable to and disconnectable from the bottle 2 for covering a mouth 6 of the bottle 2. The mouth 6 is suitably arranged in an upper part of the bottle 2. This means that when the bottle is installed in a vehicle, the mouth is positioned in the upper part of the bottle and suitably directed upwards for receiving a filling nozzle when the cap is removed from the bottle. The mouth 6 has a filling port 7 of the first expansion tank 3 and a filling port 8 of the second expansion tank 4. Both the first expansion tank filling port 7 and the second expansion tank filling port 8 are covered by the cap 5 when the cap 5 is connected to the bottle 2 as illustrated in Fig. 1.

The cap 5 is provided with a first pressure relief valve 9 allowing fluid to be discharged from the first expansion tank 3 through the first expansion tank filling port 7 to the atmosphere outside the bottle, and a second pressure relief valve 10 allowing fluid to be discharged from the second expansion tank 4 through the second expansion tank filling port 8 to the atmosphere outside of the bottle. By fluid is here meant gas and liquid, such as air and/or coolant.

In the example embodiment illustrated in Fig. 1, the first expansion tank 3 and the second expansion tank 4 are fluidly separated from each other such that fluid communication therebetween is prevented during operation. Further, the first expansion tank 3 is fluidly connected to a first cooling circuit 11 and the second expansion tank 4 is fluidly connected to a second cooling circuit 12. The cooling circuits 11, 12 and the components cooled by the coolant circulating in the cooling circuits, such as electric motors, batteries, etc., are not described in detail herein. These can be designed in various ways by a person skilled in the art.

The first pressure relief valve 9 can be configured to open at a pressure P1 in the first expansion tank 3, provided that this pressure P1 is higher than a first predetermined pressure threshold value PT1. The first predetermined pressure threshold value PT1 is suitably selected based on the operating pressure and the maximum allowed pressure in the first expansion tank 3 or in any other component fluidly connected to the first expansion tank 3. In the same way, the second pressure relief valve 10 can be configured to open at a pressure P2 in the second expansion tank 4, provided that this pressure P2 is higher than a second predetermined pressure threshold value PT2. The second predetermined pressure threshold value PT2 is suitably selected based on the operating pressure and the maximum allowed pressure in the second expansion tank 4 or in any other component fluidly connected to the second expansion tank 4.

In this example embodiment illustrated in Fig. 1, there is a need of different operating pressures for the first cooling circuit 11 and the second cooling circuit 12, where the operating pressure is higher in the first cooling circuit 11 than in the second cooling circuit 12. In such a case the first predetermined pressure threshold value PT1 is suitably higher than the second predetermined pressure threshold value PT2, i.e. PT1 >PT2. Of course, in another application PT2 can be higher than PT1. In further other applications, it is also possible that PT1=PT2 but there may be another reason for having separated cooling circuits, such as types of coolant, flows of coolant, etc.

In addition to enable fluid to be discharged from the bottle to the surrounding atmosphere at a predetermined pressure, the first and second relief valves are suitably designed such that air can flow in the opposite direction, i.e. from the atmosphere outside the bottle into the bottle, if the pressure in the current expansion tank is lower than the pressure outside the bottle.

Fig. 2 shows a variant of the cooling arrangement 1'. The difference between this cooling arrangement 1' and the cooling arrangement 1 illustrated in Fig. 1, is the design of the filling port 7' of the first expansion tank 3' and the filling port 8' of the second expansion tank 4'. The mouth 6' of the bottle 2' is suitably arranged in the upper part of the bottle 2', as previously described hereinabove, but instead of a first expansion tank filling port 7 and a second expansion tank filling port 8 arranged side by side, as illustrated in Fig. 1, the first expansion tank filling port 7' and the second expansion tank filling port 8' of the mouth 6' are arranged concentrically relative to each other. The first expansion tank filling port 7' is arranged inside of the second expansion tank filling port 8' and has suitably a circular cross section, whereas the second expansion tank filling port 8' arranged outside of the first expansion tank filling port 7' suitably has a circular ring-shaped cross section.

As it regards the remaining parts of the first expansion tank 3' and the second expansion tank 4', the first expansion tank 3' can be arranged inside of the second expansion tank 4', or the first expansion tank 3' and the second expansion tank 4' can be arranged side by side in the lower part of the bottle 2', in the same way as illustrated in Fig. 1.

Further, the first expansion tank 3' is fluidly connected to a first cooling circuit 11' and the second expansion tank 4' is fluidly connected to a second cooling circuit 12'.

In this variant of the cooling arrangement 1', the first pressure relief valve 9' allowing fluid to be discharged from the first expansion tank 3' through the first expansion tank filling port 7' to the atmosphere, and the second pressure relief valve 10' allowing fluid to be discharged from the second expansion tank 4' through the second expansion tank filling port 8' to the atmosphere, which valves 9', 10' are arranged in the cap 5', could be arranged in a way allowing them to rotate together with the cap 5' when connecting and disconnecting the cap 5' to/from the bottle 2' by means of a thread joint, for instance.

As it regards the pressures P1, P2 in the first expansion tank 3' and the second expansion tank 4', and the predetermined pressure threshold values PT1, PT2, the first pressure relief valve 9' and the second pressure relief valve 10' can be configured as previously described with reference to Fig. 1 hereinabove.

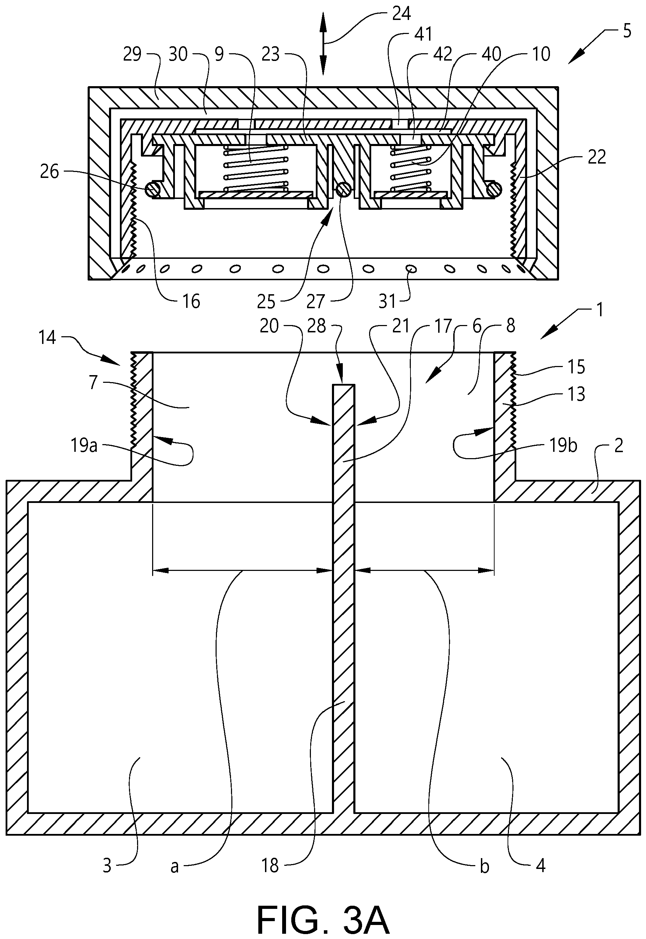

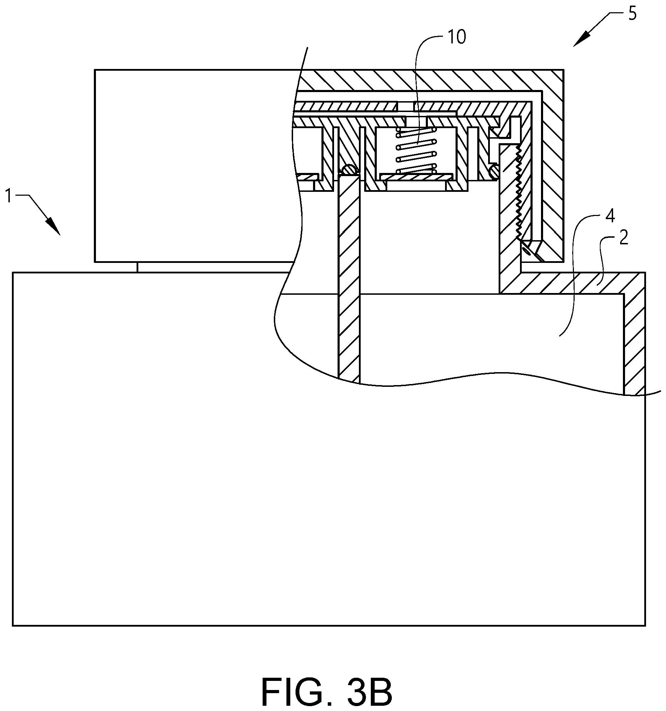

Figs. 3A and 3B show a more detailed example embodiment of the cooling arrangement 1 illustrated in Fig. 1. Fig. 3A shows the cap 5 and the bottle 2 disconnected from each other, and Fig. 3B shows the cap 5 when connected to the bottle 2. All features described with reference to Fig. 1 are not described again, but can of course be applied to this example embodiment as well.

The bottle 2 comprises a wall 13 forming the mouth 6. The mouth 6 is suitably a circular opening and the mouth wall 13 forms a neck 14 of the bottle 2 to which the cap 5 can be connected. The cap 5 has an inner surface corresponding to an outer surface of the bottle neck 14. The bottle 2 can be provided with a screw thread 15 and the cap 5 provided with a corresponding screw thread 16 such that the cap 5 is connectable and disconnectable to/from the bottle 2 by means of the screw threads 15, 16. In such a case, the bottle neck and the cap are circular. The screw thread 15 of the bottle 2 is arranged on the outside of the bottle neck 14, and the corresponding screw thread 16 of the cap 5 is arranged on the inside of the cap 5, though it would be possible to provide the cap with an outer screw thread and the bottle neck with an inner screw thread as an alternative.

The bottle 2 further comprises a wall 17 dividing the mouth 6 into the first expansion tank filling port 7 and the second expansion tank filling port 8. This mouth dividing wall 17 is suitably an extension of a wall 18 dividing the bottle 5 into the first expansion tank 3 and the second expansion tank 4. The mouth dividing wall 17 can extend straight across the mouth 6, such that the first expansion tank filling port 7 and the second expansion tank filling port 8 can be formed as separate ports within the mouth 6.

The size of the first expansion tank filling port 7 can be greater than the size of the second expansion tank filling port 8. This is indicated by "a" and "b", where a>b, in Fig. 3A. The distance "a" from an inner surface 19a of the mouth wall 13 to a first side 20 of the mouth dividing wall 17 is greater than the distance "b" from an inner surface 19b of the mouth wall 13 to a second opposite side 21 of the mouth dividing wall 17. This enables the first and second expansion tank filling ports 7, 8 to be adapted to receive a certain pressure relief valve which in turn can be used for securing that the cap will be connected such that the first pressure relief valve 9 and the second pressure relief valve 10 are arranged in the first expansion tank filling port 7 and the second expansion tank filling port 8, respectively. In this case, this also means that the cross section area of the first expansion tank filling port 7 is greater than the cross section area of the second expansion tank filling port 8.

In the example embodiment illustrated in Fig. 3A and 3B, the mouth dividing wall 17 is arranged non-centred relative to the mouth 6 making the first expansion tank filling port 7 extending between the mouth wall 13 and the first side 20 of the mouth dividing wall 17 greater than the second expansion tank filling port 8 extending between the mouth wall 13 and the second opposite side 21 of the mouth dividing wall 17. Thus, the cross section area of the first expansion tank filling port 7 is greater than the cross section area of the second expansion tank filling port 8.

In combination with different sizes and/or shapes of the first expansion tank filling port 7 and the second expansion tank filling port 8, the size and/or the shape of the first pressure relief valve 9, and/or the position of the first pressure relief valve 9 in the cap 5, is selected such that the cap 5 can be connected to the bottle 2 only when the first pressure relief valve 9 is received by the first expansion tank filling port 7. For example, the first pressure relief valve 9 can be greater than the second pressure relief valve 10 and/or the first pressure relief valve 9 can be arranged at a greater distance from the centre of the cap 5 than the second pressure relief valve 10. In the example embodiment illustrated in Figs. 3A and 3B, this means that the first pressure relief valve 9 is greater than the second pressure relief valve 10, and the centre of the first pressure relief valve 9 is arranged at a distance from the mouth dividing wall 17 that is greater than the distance between the centre of the second pressure relief valve 10 and the mouth dividing wall 17, when the cap 5 is connected to the bottle 2.

The cap 5 can have a lid portion 22 provided with the screw thread 16 and an inner portion 23 connected to the lid portion 22, which inner portion 23 is rotationally journaled relative to the lid portion 22. By arranging the first pressure relief valve 9 and the second pressure relief valve 10 in the inner portion 23, the first pressure relief valve 9 and the second pressure relief valve 10 are allowed to not rotate when the cap 5 being connected to or disconnected from the bottle 2 by rotation of the lid portion 22. The pressure relief valves 9, 10 can be attached to the inner portion 23 or be an integral part of thereof. The inner portion 23 is suitably fixed relative to the lid portion 22 with respect to an axial direction 24 corresponding to the connection/disconnection direction for the cap 5.

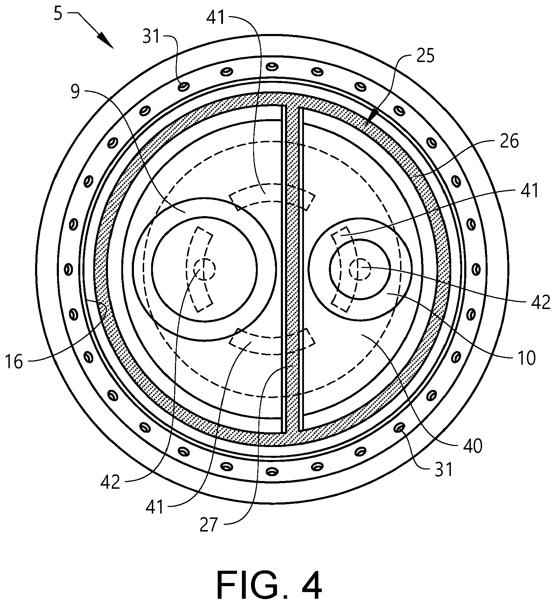

The arrangement 1 further comprises a seal 25 for sealing between the cap 5 and the bottle 2. Such a seal 25 has suitably an O-ring part 26 arranged to seal between the cap 5 and the mouth wall 13, and an additional seal part 27 arranged to seal between the cap 5 and the mouth dividing wall 17. The seal can be made in one piece. See also Fig. 4.

In the example embodiment illustrated in Figs. 3A and 3B, the O-ring part 26 is arranged to seal between the inner portion 23 and the mouth wall 13, such as the inner surfaces 19a, 19b of the mouth wall, and the additional seal part 27 is arranged to seal between the inner portion 23 and the mouth dividing wall 17, such as an upper surface 28 of the mouth dividing wall 17. Further, the seal 25 is arranged in the inner portion 23 of the cap 5. By a "poka-yoke"-solution as described hereinabove with respect to the pressure relief valves, it can also be secured that the seal 25 will be positioned correctly relative to the bottle 2 when the cap 5 being connected to the bottle 2. In this case, it means in a way such the additional seal part 27 will be positioned in contact to and along the upper surface 28 of the mouth dividing wall 27.

Thus, the first and second pressure relief valves 9, 10 and the seal 25 will not rotate while moving downwards when the cap 5 is being connected to the bottle 2 or while moving upwards when the cap 5 is being disconnected from the bottle 2.

In addition, the cap 5 may comprise an outer cover 29 connected and rotationally locked to the lid portion 22 which outer cover 29 is arranged outside the lid portion 22. Such an outer cover 29 is suitably used for protecting the first and second pressure relief valves 9, 10 and/or any seal 25 arranged in the cap 5, and for providing a grip for rotation of the cap 5.

The outer cover 29 and the lid portion 22 are arranged relative to each other such that a channel 30 is formed therebetween, which channel 30 is connected to the atmosphere. The first pressure relief valve 9 is arranged to allow fluid to be discharged from the first expansion tank 3 through the first expansion tank filling port 7 to the channel 30, and the second pressure relief valve 10 is arranged to allow fluid to be discharged from the second expansion tank 4 through the second expansion tank filling port 8 to the channel 30. The outer cover 29 has openings 31 for connection of the channel 30 to the atmosphere.

Fig. 4 shows the inside of the circular cap 5. The seal 25, illustrated in grey, with its O-ring part 26 arranged to seal between the cap 5 and the mouth wall 13, and the additional seal part 27 arranged to seal between the cap 5 and the mouth dividing wall 17, is made in one piece. The seal can be arranged in grooves of the inner portion 23 of the cap 5.

Fig. 4 further shows a recess 40 and openings 41 in the lid portion 22 of the cap 5. See dashed lines in Fig. 4. The inner portion 23 has holes 42 at the positions for the first and second relief valves. These holes 42 mouth into the recess 40. The recess 40 is in turn connected to the channel 30 through the openings 41. Finally, as previously described, the channel 30 is connected to the atmosphere through the openings 31 arranged in the lower part of the cap 5. See also Fig. 3A showing the recess 40 and two of the openings 41, and the holes 42 at the first and second relief valves in a cross section view.

It is to be understood that the present invention is not limited to the embodiments described above and illustrated in the drawings; rather, the skilled person will recognize that many changes and modifications may be made within the scope of the appended claims.

## Claims

1. A cooling arrangement (1) for a vehicle, the arrangement comprising a bottle (2) having a first expansion tank (3) for a coolant and a second expansion tank (4) for a coolant, and a cap (5) which is connectable to and disconnectable from the bottle for covering a mouth (6) of the bottle, the mouth having a filling port (7) of the first expansion tank (3) and a filling port (8) of the second expansion tank (4) which both are covered by the cap (5) when the cap is connected to the bottle (2), **characterized in that** the cap (5) is provided with a first pressure relief valve (9) allowing fluid to be discharged from the first expansion tank (3) through the first expansion tank filling port (7) to the atmosphere, and a second pressure relief valve (10) allowing fluid to be discharged from the second expansion tank (4) through the second expansion tank filling port (8) to the atmosphere.

2. An arrangement according to claim 1, **characterized in that** the first expansion tank (3) and the second expansion tank (4) are fluidly separated from each other such that fluid communication therebetween is prevented during operation, the first expansion tank (3) being fluidly connectable to a first cooling circuit (11) and the second expansion tank (4) being fluidly connectable to a second cooling circuit (12).

3. An arrangement according to claim 1 or 2, **characterized in that** the first pressure relief valve (9) is configured to open at a pressure P1 in the first expansion tank (3), provided that this pressure P1 is higher than a first predetermined pressure threshold value PT1, and the second pressure relief valve (10) is configured to open at a pressure P2 in the second expansion tank (4), provided that this pressure P2 is higher than a second predetermined pressure threshold value PT2.

4. An arrangement according to claim 3, **characterized in that** the first predetermined pressure threshold value PT1 is higher than the second predetermined pressure threshold value PT2, i.e. PT1 >PT2.

5. An arrangement according to any preceding claim, **characterized in that** the bottle (2) comprises a wall (13) forming the mouth (6), and a wall (17) dividing the mouth (6) into the first expansion tank filling port (7) and the second expansion tank filling port (8).

6. An arrangement according to any preceding claim, **characterized in that** the size of the first expansion tank filling port (7) is greater than the second expansion tank filling port (8).

7. An arrangement according to claim 5 and 6, **characterized in that** the mouth dividing wall (17) is arranged non-centred relative to the mouth (6) making the first expansion tank filling port (7) extending between the mouth wall (13) and a first side (20) of the mouth dividing wall (17) greater than the second expansion tank filling port (8) extending between the mouth wall (13) and a second opposite side (21) of the mouth dividing wall (17).

8. An arrangement according to claim 6 or 7, **characterized in that** the size and/or the shape of the first pressure relief valve (9) and/or the position of the first pressure relief valve in the cap (5), is selected such that the cap (5) is connectable to the bottle (2) only when the first pressure relief valve (9) is received by the first expansion tank filling port (7).

9. An arrangement according to any preceding claim, **characterized in that** the arrangement (1) comprises a seal (25) for sealing between the cap (5) and the bottle (2).

10. An arrangement according to claim 5 and 9, **characterized in that** the seal (25) comprising an O-ring part (26) arranged to seal between the cap (5) and the mouth wall (13), and an additional seal part (27) arranged to seal between the cap (5) and the mouth dividing wall (17).

11. An arrangement according to any preceding claim, **characterized in that** the bottle (2) is provided with a screw thread (15) and the cap (5) is provided with a corresponding screw thread (16) such that the cap is connectable and disconnectable to/from the bottle by means of the screw threads.

12. An arrangement according to claim 11, **characterized in that** the cap (5) has a lid portion (22) provided with the screw thread (16) and an inner portion (23) connected to the lid portion (22), which inner portion (23) is rotationally journaled relative to the lid portion (22), the first pressure relief valve (9) and the second pressure relief valve (10) being arranged in the inner portion (23) allowing the first pressure relief valve (9) and the second pressure relief valve (10) to not rotate when the cap (5) being connected to or disconnected from the bottle (2) by rotation of the lid portion (22).

13. An arrangement according to claim 10 and 12, **characterized in that** the O-ring part (26) is arranged to seal between the inner portion (23) and the mouth wall (13), and the additional seal part (27) is arranged to seal between the inner portion (23) and the mouth dividing wall (17).

14. An arrangement according to claim 13, **characterized in that** the seal (25) is arranged in the inner portion (23) of the cap (5).

15. An arrangement according to claim 12, **characterized in that** the cap (5) comprises an outer cover (29) connected and rotationally locked to the lid portion (22) which outer cover is arranged outside the lid portion, the outer cover (29) and the lid portion (22) being arranged relative to each other such that a channel (30) is formed therebetween, which channel (30) is connected to the atmosphere, the first pressure relief valve (9) being arranged to allow fluid to be discharged from the first expansion tank (3) through the first expansion tank filling port (7) to the channel (30), and the second pressure relief valve (10) being arranged to allow fluid to be discharged from the second expansion tank (4) through the second expansion tank filling port (8) to the channel (30).

## Patentansprüche

1. Kühlanordnung (1) für ein Fahrzeug, wobei die Anordnung eine Flasche (2) mit einem ersten Expansionstank (3) für ein Kühlmittel und einem zweiten Expansionstank (4) für ein Kühlmittel und eine Kappe (5) umfasst, die mit der Flasche verbindbar und davon lösbar ist, um einen Mund (6) der Flasche zu bedecken, wobei der Mund eine Füllöffnung (7) des ersten Expansionstanks (3) und eine Füllöffnung (8) des zweiten Expansionstanks (4) aufweist, die beide durch die Kappe (5) bedeckt sind, wenn die Kappe mit der Flasche (2) verbunden ist, **dadurch gekennzeichnet, dass** die Kappe (5) mit einem ersten Druckentlastungsventil (9), das ermöglicht, dass Fluid aus dem ersten Expansionstank (3) durch die Füllöffnung (7) des ersten Expansionstanks an die Atmosphäre abgelassen wird, und einem zweiten Druckentlastungsventil (10), das ermöglicht, dass Fluid aus dem zweiten Expansionstank (4) durch die Füllöffnung (8) des zweiten Expansionstanks an die Atmosphäre abgelassen wird, bereitgestellt ist.

2. Anordnung nach Anspruch 1, **dadurch gekennzeichnet, dass** der erste Expansionstank (3) und der zweite Expansionstank (4) fluidisch voneinander getrennt sind, sodass Fluidkommunikation dazwischen während des Betriebs verhindert wird, wobei der erste Expansionstank (3) fluidisch mit einem ersten Kühlkreislauf (11) verbindbar ist und der zweite Expansionstank (4) fluidisch mit einem zweiten Kühlkreislauf (12) verbindbar ist.

3. Anordnung nach Anspruch 1 oder 2, **dadurch gekennzeichnet, dass** das erste Druckentlastungsventil (9) konfiguriert ist, um sich bei einem Druck P1 in dem ersten Expansionstank (3) zu öffnen, vorausgesetzt, dass dieser Druck P1 höher als ein erster vorbestimmter Druckschwellenwert PT1 ist, und das zweite Druckentlastungsventil (10) konfiguriert ist, um sich bei einem Druck P2 in dem zweiten Expansionstank (4) zu öffnen, vorausgesetzt, dass dieser Druck P2 höher als ein zweiter vorbestimmter Druckschwellenwert PT2 ist.

4. Anordnung nach Anspruch 3, **dadurch gekennzeichnet, dass** der erste vorbestimmte Druckschwellenwert PT1 höher als der zweite vorbestimmte Druckschwellenwert PT2 ist, d. h. Pt1>PT2.

5. Anordnung nach einem vorhergehenden Anspruch, **dadurch gekennzeichnet, dass** die Flasche (2) eine Wand (13), die den Mund (6) bildet, und eine Wand (17), die den Mund (6) in die Füllöffnung (7) des ersten Expansionstanks und die Füllöffnung (8) des zweiten Expansionstanks unterteilt, umfasst.

6. Anordnung nach einem vorhergehenden Anspruch, **dadurch gekennzeichnet, dass** die Größe der Füllöffnung (7) des ersten Expansionstanks größer als die Füllöffnung (8) des zweiten Expansionstanks ist.

7. Anordnung nach Anspruch 5 und 6, **dadurch gekennzeichnet, dass** die Mundunterteilungswand (17) nicht zentriert relativ zu dem Mund (6) angeordnet ist, was die Füllöffnung (7) des ersten Expansionstanks, die sich zwischen der Mundwand (13) und einer ersten Seite (20) der Mundunterteilungswand (17) erstreckt, größer als die Füllöffnung (8) des zweiten Expansionstanks macht, die sich zwischen der Mundwand (13) und einer zweiten gegenüberliegenden Seite (21) der Mundunterteilungswand (17) erstreckt.

8. Anordnung nach Anspruch 6 oder 7, **dadurch gekennzeichnet, dass** die Größe und/oder die Form des ersten Druckentlastungsventils (9) und/oder die Position des ersten Druckentlastungsventils in der Kappe (5) ausgewählt ist, sodass die Kappe (5) nur mit der Flasche (2) verbindbar ist, wenn das erste Druckentlastungsventil (9) durch die Füllöffnung (7) des ersten Expansionstanks aufgenommen ist.

9. Anordnung nach einem vorhergehenden Anspruch, **dadurch gekennzeichnet, dass** die Anordnung (1) eine Dichtung (25) zum Abdichten zwischen der Kappe (5) und der Flasche (2) umfasst.

10. Anordnung nach Anspruch 5 und 9, **dadurch gekennzeichnet, dass** die Dichtung (25) einen O-Ring-Teil (26), der angeordnet ist, um zwischen der Kappe (5) und der Mundwand (13) abzudichten, und einen zusätzlichen Dichtungsteil (27), der angeordnet ist, um zwischen der Kappe (5) und der Mundunterteilungswand (17) abzudichten, umfasst.

11. Anordnung nach einem vorhergehenden Anspruch, **dadurch gekennzeichnet, dass** die Flasche (2) mit einem Schraubgewinde (15) bereitgestellt ist und die Kappe (5) mit einem entsprechenden Schraubgewinde (16) bereitgestellt ist, sodass die Kappe mit der Flasche mittels der Schraubgewinde verbindbar und davon lösbar ist.

12. Anordnung nach Anspruch 11, **dadurch gekennzeichnet, dass** die Kappe (5) einen Deckelabschnitt (22), der mit dem Schraubgewinde (16) bereitgestellt ist, und einen Innenabschnitt (23), der mit dem Deckelabschnitt (22) verbunden ist, aufweist, wobei der Innenabschnitt (23) drehbar relativ zu dem Deckelabschnitt (22) gelagert ist, wobei das erste Druckentlastungsventil (9) und das zweite Druckentlastungsventil (10) in dem Innenabschnitt (23) angeordnet sind, wodurch ermöglicht wird, dass sich das erste Druckentlastungsventil (9) und das zweite Druckentlastungsventil (10) nicht drehen, wenn die Kappe (5) durch Drehung des Deckelabschnittes (22) mit der Flasche (2) verbunden oder davon gelöst wird.

13. Anordnung nach Anspruch 10 und 12, **dadurch gekennzeichnet, dass** der O-Ring-Teil (26) angeordnet ist, um zwischen dem Innenabschnitt (23) und der Mundwand (13) abzudichten, und der zusätzliche Dichtungsteil (27) angeordnet ist, um zwischen dem Innenabschnitt (23) und der Mundunterteilungswand (17) abzudichten.

14. Anordnung nach Anspruch 13, **dadurch gekennzeichnet, dass** die Dichtung (25) in dem Innenabschnitt (23) der Kappe (5) angeordnet ist.

15. Anordnung nach Anspruch 12, **dadurch gekennzeichnet, dass** die Kappe (5) eine Außenabdeckung (29) umfasst, die mit dem Deckelabschnitt (22) verbunden und drehbar daran verriegelt ist, wobei die Außenabdeckung außerhalb des Deckelabschnittes angeordnet ist, wobei die Außenabdeckung (29) und der Deckelabschnitt (22) relativ zueinander angeordnet sind, sodass ein Kanal (30) dazwischen gebildet ist, wobei der Kanal (30) mit der Atmosphäre verbunden ist, wobei das erste Druckentlastungsventil (9) angeordnet ist, um zu ermöglichen, dass Fluid aus dem ersten Expansionstank (3) durch die Füllöffnung (7) des ersten Expansionstanks zu dem Kanal (30) abgelassen wird und das zweite Druckentlastungsventil (10) angeordnet ist, um zu ermöglichen, dass Fluid aus dem zweiten Expansionstank (4) durch die Füllöffnung (8) des zweiten Expansionstanks zu dem Kanal (30) abgelassen wird.

## Revendications

1. Agencement de refroidissement (1) pour un véhicule, l'agencement comprenant une bouteille (2) ayant un premier vase d'expansion (3) pour un liquide de refroidissement et un second vase d'expansion (4) pour un liquide de refroidissement, et un bouchon (5) qui est connectable et déconnectable de la bouteille pour recouvrir une embouchure (6) de la bouteille, l'embouchure ayant un orifice de remplissage (7) du premier vase d'expansion (3) et un orifice de remplissage (8) du second vase d'expansion (4) qui sont tous deux recouverts par le bouchon (5) lorsque le bouchon est relié à la bouteille (2), **caractérisé en ce que** le bouchon (5) est muni d'un premier clapet de surpression (9) permettant d'évacuer un fluide du premier vase d'expansion (3) à travers l'orifice de remplissage du premier vase d'expansion (7) vers l'atmosphère, et un second clapet de surpression (10) permettant d'évacuer un fluide du second vase d'expansion (4) à travers l'orifice de remplissage du second vase d'expansion (8) vers l'atmosphère.

2. Agencement selon la revendication 1, **caractérisé en ce que** le premier vase d'expansion (3) et le second vase d'expansion (4) sont fluidiquement séparés l'un de l'autre de sorte que la communication fluidique entre eux est empêchée pendant le fonctionnement, le premier vase d'expansion (3) étant fluidiquement raccordable à un premier circuit de refroidissement (11) et le second vase d'expansion (4) étant fluidiquement raccordable à un second circuit de refroidissement (12) .

3. Agencement selon la revendication 1 ou 2, **caractérisé en ce que** le premier clapet de surpression (9) est configuré pour s'ouvrir à une pression P1 dans le premier vase d'expansion (3), à condition que cette pression P1 soit supérieure à une première valeur de seuil de pression prédéterminée PT1, et le second clapet de surpression (10) est configuré pour s'ouvrir à une pression P2 dans le second vase d'expansion (4), à condition que cette pression P2 soit supérieure à une seconde valeur de seuil de pression prédéterminée PT2.

4. Agencement selon la revendication 3, **caractérisé en ce que** la première valeur de seuil de pression prédéterminée PT1 est supérieure à la seconde valeur de seuil de pression prédéterminée PT2, c'est-à-dire PT1 > PT2.

5. Agencement selon une quelconque revendication précédente, **caractérisé en ce que** la bouteille (2) comprend une paroi (13) formant l'embouchure (6), et une paroi (17) divisant l'embouchure (6) en l'orifice de remplissage du premier vase d'expansion (7) et l'orifice de remplissage du second vase d'expansion (8).

6. Agencement selon une quelconque revendication précédente, **caractérisé en ce que** la taille de l'orifice de remplissage du premier vase d'expansion (7) est supérieure à celle de l'orifice de remplissage du second vase d'expansion (8).

7. Agencement selon les revendications 5 et 6, **caractérisé en ce que** la paroi divisant l'embouchure (17) est agencée de manière non centrée par rapport à l'embouchure (6), ce qui fait que l'orifice de remplissage du premier vase d'expansion (7) s'étend entre la paroi d'embouchure (13) et un premier côté (20) de la paroi divisant l'embouchure (17) est plus grand que l'orifice de remplissage du second vase d'expansion (8) s'étendant entre la paroi d'embouchure (13) et un second côté opposé (21) de la paroi divisant l'embouchure (17).

8. Agencement selon la revendication 6 ou 7, **caractérisé en ce que** la taille et/ou la forme du premier clapet de surpression (9) et/ou la position du premier clapet de surpression dans le bouchon (5), sont choisies de sorte que le bouchon (5) ne peut être connecté à la bouteille (2) que lorsque le premier clapet de surpression (9) est reçu par l'orifice de remplissage du premier vase d'expansion (7).

9. Agencement selon une quelconque revendication précédente, **caractérisé en ce que** l'agencement (1) comporte un joint (25) pour assurer l'étanchéité entre le bouchon (5) et la bouteille (2) .

10. Agencement selon les revendications 5 et 9, **caractérisé en ce que** le joint (25) comprenant une partie de joint torique (26) agencée pour assurer l'étanchéité entre le bouchon (5) et la paroi d'embouchure (13), et une partie de joint supplémentaire (27) agencée pour assurer l'étanchéité entre le capuchon (5) et la paroi divisant l'embouchure (17).

11. Agencement selon une quelconque revendication précédente, **caractérisé en ce que** la bouteille (2) est pourvue d'un filetage de vis (15) et le bouchon (5) est pourvu d'un filetage de vis correspondant (16) de sorte que le bouchon est connectable et déconnectable à/de la bouteille au moyen des filetages de vis.

12. Agencement selon la revendication 11, **caractérisé en ce que** le bouchon (5) a une partie de couvercle (22) munie du filetage de vis (16) et une partie intérieure (23) reliée à la partie de couvercle (22), laquelle partie intérieure (23) est tourillonnée en rotation par rapport à la partie de couvercle (22), le premier clapet de surpression (9) et le second clapet de surpression (10) étant agencés dans la partie intérieure (23) permettant au premier clapet de surpression (9) et au second clapet de surpression (10) de ne pas tourner lorsque le bouchon (5) est connecté ou déconnecté de la bouteille (2) par rotation de la partie de couvercle (22).

13. Agencement selon les revendications 10 et 12, **caractérisé en ce que** la partie de joint torique (26) est agencée pour assurer l'étanchéité entre la partie interne (23) et la paroi d'embouchure (13), et la partie de joint supplémentaire (27) est agencée pour assurer l'étanchéité entre la partie intérieure (23) et la paroi divisant l'embouchure (17).

14. Agencement selon la revendication 13, **caractérisé en ce que** le joint (25) est disposé dans la partie intérieure (23) du bouchon (5).

15. Agencement selon la revendication 12, **caractérisé en ce que** le bouchon (5) comprend un capot extérieur (29) relié et verrouillé en rotation à la partie de couvercle (22), lequel capot extérieur est agencé à l'extérieur de la partie de couvercle, le capot extérieur (29) et la partie de couvercle (22) étant agencés l'un par rapport à l'autre de sorte qu'un canal (30) est formé entre eux, lequel canal (30) est relié à l'atmosphère, le premier clapet de surpression (9) étant agencé pour permettre d'évacuer un fluide du premier vase d'expansion (3) à travers l'orifice de remplissage du premier vase d'expansion (7) jusqu'au canal (30), et le second clapet de surpression (10) étant agencé pour permettre d'évacuer un fluide du second vase d'expansion (4) à travers l'orifice de remplissage du second vase d'expansion (8) jusqu'au canal (30).
